# EUROPEAN PATENT APPLICATION

(11) **EP 4 600 159 A1**
(43) Date of publication of application: **13.08.2025**
(21) Application number: 24157154.6
(22) Date of filing: 12.02.2024
(51) Int. Cl.: B64U 10/14, B64U 20/70, B64U 20/87, B64U 30/20, B64U 80/30, B64U 101/05, B64U 101/31, B64U 101/20

(54) **DRONE, AND KIT OF PARTS FOR OPERATING THE DRONE**

(71) Applicant: Red Bull GmbH, 5330 Fuschl am See (AT)
(72) Inventor: HOGENBIRK, Ralph, 5627 Eindhoven (NL); VAN 'T HUL, Bas, 7415 Deventer (NL); DE KOSTER, Thomas, 3024 Rotterdam (NL)
(74) Representative: Burger, Hannes Alfred

(57) **Abstract**

The present invention refers to a drone comprising a) a longitudinally oriented main body (10), b) three or four rotor arms (40) connected to the main body in the transition from the top section (12) to the bottom section (14), each carrying a motor (42), and a propeller (44), wherein the three or four rotor arms comprise a support structure, c) a first camera unit (50) integrated in the top section, which comprises a high-resolution digital video camera, and d) a battery module (60, figure 4), wherein the center of gravity of the drone lies in the or in particular above the plane spanned by the support structure of the rotor arms or above the plane spanned by the propellers of the rotor arms. The invention further refers to a kit of parts for operating a drone comprising a drone, in particular a drone according to the invention, a control unit, a relay drone and a display unit.

## Description

The present invention relates to a drone ("Red Bull Drone 1"), in particular to a FPV drone, as well as to a kit of parts for operating the drone.

Drones are well established products. They are available in different forms and sizes and can be used for various purposes. Among the various types of drones also such drones exist which are capable of following moving objects, such as motor vehicles. Typically, such drones are used to produce images and/or videos of the objects to be followed. However, the faster the object is moving the more challenging it becomes to configure drones which can keep up with the speed of the moving object for a prolonged period of time, while at the same time capturing high quality photos and/or videos.

The combination of equipment which is needed by the drone to fulfil its purpose, e.g. a camera and batteries, and the requirements set to the speed and the maximum achievable flight time of the drone often lead to situations where the drone is either not fast enough and/or not capable of providing enough flight time to obtain the footage desired by the users of such drones. This strongly limits the possibilities of video producers, e.g. in the motor racing sport industry, to produce footage which allows the viewer to follow a fast-moving object, in particular in a closeup position and/or in a bird-view perspective, over a prolonged period of time. Consequently, a strong need exists to provide drones which are capable of providing the described footage of fast-moving objects, in particular racing cars.

It is therefore an object of the present invention to provide a drone which overcomes the drawbacks of the prior art. In particular, it is an object of the invention to provide a drone which is capable of following a fast-moving object over a prolonged period of time, while at the same time capturing video footage of said object. It is another object of the present invention to provide a fast and/or light-weight drone.

This object is achieved by a drone comprising a longitudinally oriented main body, having a longitudinal axis (X), with a top section and a bottom section, each having a housing, three or four rotor arms, in particular four rotor arms, connected to the main body in the transition from the top section to the bottom section each carrying a motor and a propeller in operative cooperation with the motor and comprising a plurality of rotor blades, in particular two rotor blades. The in total three or the in total four rotor arms comprise a support structure. The drone further has a first camera unit integrated in the top section, in particular in the region of or adjacent to the, in particular rounded or tapered, tip of the top section, which comprises a high-resolution digital video camera with a camera axis, in particular a 4K, 5K, 6K, 7K or 8K digital video camera. Additionally, the drone has a battery module. The center of gravity of the drone lies in the or in particular above the plane spanned by the support structure of the in total three or of the in total four rotor arms, in particular of the in total four rotor arms, or above the plane spanned by the propellers of the in total three or in total four rotor arms, in particular of the in total four rotor arms, in each case with reference to the tip of the drone. In other words, if the center of gravity of the drone lies above the plane spanned by the support structure of the rotor arms or above the plane spanned by the propellers of the rotor arms, it is shifted in the direction of the tip of the drone. In a preferred embodiment, the center of gravity lies in the or in particular above the plane spanned by a support structure of the in total three or in total four rotor arms, more preferably above the plane spanned by the support structure of the in total four rotor arms.

A drone, with a longitudinally oriented main body and having a longitudinal axis, within the meaning of the present invention usually has a rocket-like main body and may also be referred to as rocket drone.

It has been found that by configuring the center of gravity of the drone to be in the or in particular above the plane spanned by the support structure of the in total three or in total four rotor arms, preferably above the plane spanned by the support structure of the in total four rotor arms, or above the plane spanned by the propellers of the in total three or in total four rotor arms, preferably above the plane spanned by the propellers of the in total four rotor arms, more preferably above the plane spanned by the support structure of the in total four rotor arms, a stable flight, in particular at high speeds, can be achieved. A stable flight is beneficial not only for the performance of the drone in terms of maximum speed and maximum flight duration but also for providing high quality video footage at the same time.

According to another preferred embodiment of the drone according to the invention such drones are preferred in which the center of gravity lies adjacent to the plane spanned by the support structure of the in total three or in total four rotor arms or adjacent to the plane spanned by the propellers of the in total three or in total four rotor arms. It is particularly preferred that the center of gravity lies adjacent to the plane spanned by the support structure of the in total four rotor arms. In an even more preferred embodiment, the center of gravity is located in a part of the top section between the plane spanned by the support structure of the in total three or in total four rotor arms, in particular of the in total four rotor arms, and one quarter, in particular one fifth, more in particular one eighth, of the extension from this plane to the tip of the top section. It has been found that if the center of gravity is limited to such narrow region, in particular to the region of one fifth, more in particular one eighth and even more in particular one tenth, of the extension from this plane to the tip of the top section, the drone of the invention usually shows an even more stable flight profile and allows for higher speeds for prolonged periods of time.

The support structure of the in total three or in total four rotor arms can in a preferred embodiment be made of carbon fiber-reinforced material. Such support structure regularly comprises arm elements to which the motors can be fixed and also a ring, cross-like or plate-like element to which these arm elements are fixed or to which these arm elements are an integral part. This ring, cross-like or plate-like structure is usually located inside the housing of the main body. In order to obtain even more improved aerodynamic properties, the arm elements of the support structure of the three or four rotor arms can be encased in respective arm covers. Those arm covers are preferred which have a breadth, when viewed from the tip, which is smaller than the length extension when viewed along the longitudinal axis of the main body of the drone. In this manner improved aerodynamic properties can be obtained.

In another preferred embodiment the drone according to the invention further comprises a second camera unit integrated in the top section, in particular in the region of or adjacent to the, in particular rounded or tapered, tip of the top section, in particular an analog video camera. In an alternative embodiment, the second camera unit can also be equipped with a high-resolution digital video camera such as a 4K camera. The second camera unit comprises a camera having a camera axis.

Preferably, the drone according to the invention is a "First Person View" or FPV drone. FPV drones in the meaning of the present invention are drones which allow the control of the drone in a first-person-view. In other words, the drone can be controlled through the eye of a virtual pilot on board of the drone. The view of the virtual pilot is either generated by the second camera unit or by the first camera unit, in particular when no second camera is present. Preferably, the view of the virtual pilot is generated by the second camera unit.

The drone according to the invention can operate at high speeds up to 100 km/h, preferably up to 200 km/h, more preferably up to 300 km/h and even more preferably at least 330 km/h.

In terms of maximum operational times with a fully charged battery, drones according to the invention preferably can maintain an average speed of more than 150 km/h for at least 1.6 mins, more preferably more than 200 km/h for at least 1.6 mins, and even more preferably more than 220 km/h for at least 1.6 mins.

In a highly preferred embodiment, the drone according to the invention is able to follow a fast moving object, in particular a formula-1 racing car, for at least one lap of a formula-1 racing circuit, e.g. 5 kilometres at an average speed of more than 200 km/h. At the same time the drone of the invention is able to capture video footage, in particular at least 4K-, 5K- or 6K-video footage, of the fast moving object, in particular a formula-1 racing car, during part of, preferably the entire, operational time.

In another preferred embodiment the drone according to the invention further comprises a damper unit. Alternatively or in addition, a preferred embodiment of the drone according to the invention comprises a mounting for the first camera, wherein the mounting comprises an elastic material, in particular a thermoplastic elastomer. Typically drones operate at high speeds at which vibrations of the drone can occur. Therefore, the damper unit or the mounting, preferably in combination, help to stabilize the first camera unit and improve the video and/or photo quality.

In yet another embodiment of the drone according to the invention the drone further comprises at least one heat sink unit, in particular based on aluminum.

Due to the high operational speeds of the drone according to the invention, heat is generated by various components of the drone during the flight which needs to be emitted to the environment of the drone. The at least one heat sink unit, in particular based on aluminum, helps to keep the drone at an operational temperature which is beneficial for the performance of the drone, in particular in terms of prolonged operational times and maximum speeds to be achieved.

Other components which can be comprised by the drone according to the invention might be selected from the group consisting of antennas, GPS modules, radio control receivers, video transmitters, flight control electronics, and a combination of the aforementioned components.

In order to provide control means for the speed and/or the orientation of the drone according to the invention the drone can further comprise, in particular remotely operable, drag means, in particular flaps, adapted and arranged to decelerate the drone.

Flaps have surprisingly proven to be efficient to achieve fast deceleration of the drone according to the invention. Furthermore, flaps can help to maneuver the drone. This is in particular important when following a fast object which performs strong acceleration and deceleration maneuvers and/or fast changes of its moving direction, e.g. in tight corners, such as hairpin curves on formular-1 tracks. In this case the formular-1 car might break from its top speeds, e.g. around more than 370 km/h, down to 50 km/h and less. It is another advantage of the drone of the present invention that acceleration and deceleration maneuvers are manageable which allow to follow a fast moving object such as a formula-1 racing car along the entire track even without drag means such as flaps.

In a preferred embodiment of the drone according to the invention, a PCB (Printed Circuit Board), in particular the PCB of an action camera unit, such as a GoPro unit, is placed next to the battery module, in particular on a back plate next to the battery module, and is more in particular fixed to the battery module. Alternatively and in particular in combination, the PCB is preferably located adjacent to a first heat sink unit of the at least one heat sink unit, more in particular connected to the first heat sink unit, preferably via a cooling paste.

The placement of the PCB inside the housing of the main body preferably aids in tuning the heat removal capacity of the drone, which keeps the drone, in particular the electronics, at or close to its optimal operational temperature. Therefore, it is preferred to connect the PCB to a heat sink unit.

In yet another embodiment the drone according to the invention further comprises an electronic speed controller (ESC), in particular located adjacent to the heat sink unit of the at least one heat sink unit, more in particular connected to a second heat sink unit, preferably via a cooling paste. In a preferred embodiment, the electronic speed controller is located between two second heat sink units, e.g. sandwiched between such two second heat sink units.

The electronic speed controller controls the motor of the rotors which propels the drone. By placing the electronic speed controller adjacent to a heat sink unit the electronic speed controller can be efficiently cooled which in turn preferably allows to run the motors and consequently the drone at high speeds, in particular for a prolonged time, without overheating the electronic speed controller which would decrease the maximum operational time, in particular at high speeds, of the drone. The cooling effect can be even further improved when the electronic speed controller is connected to the heat sink unit via a cooling paste. It is further preferred if the electronic speed controller is positioned in the bottom section. Preferably, the second heat sink unit is also positioned in the bottom section.

In another preferred embodiment the drone according to the invention further comprises a support structure of the top section of the main body inside the housing of the main body, in particular made in one piece, more in particular made of a thermoplastic polymer, preferably of polyamide, e.g. by 3D printing. Alternatively, this support structure of the top section of the main body can be made of at least two pieces, in particular a first piece from a thermoplastic polymer, preferably of polyamide, e.g. via 3D-printing, and a second piece comprising a carbon fiber-reinforced matt placed on and connected to said first piece.

In case that the support structure is made of a first piece via 3D-printing, it is particularly preferred to add a carbon fiber-reinforced part, in particular in the form of a mat, in the region of the electronic speed controller. In this way vibrations can be reduced or prevented particularly well, which allows the drone to operate very reliably at high speeds.

Such embodiments of an embodiment the drone according to the invention are preferred in which the drone comprises the damper unit, the at least one heat sink unit, the electronic speed controller, the support structure of the top section of the main body, and the support structure of the in total three or in total four rotor arms, in particular of the in total four rotor arms. Such a drone was found to solve the problem underlying the present invention particularly well.

It further has been found that drones according to the invention can be operated particularly well if certain size configurations are met. Such drones according to the invention are preferred in which the length of the top section is in the range of 150 to 250 mm, preferably 170 to 220 mm. The length of the top section (L1) can be measured from the tip to the top of the rotor arms. Alternatively, and in particular in combination the length of the bottom section can be in the range of 50 to 150 mm, preferably 70 to 120 mm. The length of the bottom section (L2) can be measured from the top of the rotor arms to the bottom. Alternatively and in particular in combination the total length (L3) of the drone can be in the range of 200 to 400 mm, preferably 240 to 350 mm. Alternatively and in particular in combination, the length of the rotor blades (L4) can be in the range of 30 to 90 mm, preferably 40 to 80 mm. In case a propeller is made of two rotor blades these blades are preferably colinear, i.e., have an angle of 180°. The length of such a propeller can be in the range of 60 to 200 mm, preferably 80 to 170 mm. Alternatively and in particular in combination, the length of the rotor arms (L5) can be in the range of 70 to 175 mm, preferably 100 to 155 mm. The length of the rotor arms can be measured from the housing of the main body to the end of a rotor arm. And, alternatively and in particular in combination, the distance (L6) between the rotor axis of a propeller, in particular of all propellers, and the longitudinal axis of the drone can be in the range of 100 to 180 mm, preferably 120 to160 mm. Most preferably, all parameters, in particular all preferred parameters, mentioned above in this paragraph are met with a drone of the present invention.

Further, if the drone has four rotor arms, such drones are preferred in which the distance between the rotor axes of two opposing propellers in case of in total four rotor arms is larger than the length of the drone. According to another embodiment the maximum diameter (D) of the top section can preferably be in the range of 60 to 90 mm, more preferably 65 to 85 mm, and even more preferably 70 to 80 mm. Alternatively, and in particular in combination with the aforementioned feature the maximum diameter of the bottom section can be in the range of 60 to 90 mm, preferably 70 to 80 mm.

In some cases, it can be preferred if in the drones according to the invention the bottom section is not tapered towards the end of the drone or is tapered in the region of the bottom section towards the end of the drone by at most 10 % of the diameter starting just below the rotor arms, preferably just below the cover of the rotor arms.

In drones according to the invention the housing or part of the housing of the main body preferably comprises or consists of carbon fiber material, polyesters, in particular polylactides, and/or polyamides, in particular polyamide 12 ("PA12"). In an even more preferred embodiment, the housing or a part of the housing is made of a foamed material or polymer, in particular of foamed thermoplastic polymers, more in particular foamed polylactides. It has surprisingly been found, that by use of a foamed polymers, in particular foamed thermoplastic polymers, a housing can be obtained which though being rather lightweight still lends sufficient stability to the structure of the drone of the invention and is in particular not prone to vibration also at high operating speeds.

Light-weight materials reduce the weight of the drone which causes the drone to consume less energy during operation. Thereby, the maximum operational time of the drone at a certain speed, in particular high speed, can be prolonged.

Preferably the drone according to the invention has a weight in the range of 750 to 1500 g, preferably 800 to 1200 g. According to another embodiment of the drone of the invention, the weight of the battery module is preferably in the range of 350 to 600 g, more preferably 400 to 500 g.

The weight of the battery module significantly contributes to the overall weight of the drone. Hence, the maximum operational time of the drone at a certain speed, in particular high speed, can be prolonged when minimizing the weight of the battery. It has surprisingly been found that the weight of the battery unit as well as its placement inside the housing of the main body can be used to properly adjust the center of gravity.

In another preferred embodiment of the drone according to the invention the camera axis of the first camera unit and in particular the camera axis of the first camera unit and the camera axis of the second camera unit is/are tilted with regard to the longitudinal axis of the drone. In an even more preferred embodiment, the camera axis of the first camera unit and in particular the camera axis of the first camera unit and the camera axis of the second camera is/are arranged and adapted to be tilted, in other words, is/are tiltable, in particular in a remotely controlled manner, at least in one dimension. The first camera unit and in particular the first camera unit and the second camera unit are usually not located directly at the tip of the drone, but in the region close to the tip. In this region the drone is preferably rounded or tapered. In operation, i.e. when in flying mode the first camera unit and in particular the first camera unit and the second camera is/are to be found on the underside of the main body so that, for example, a photo or video of a racing car beneath can be taken. Accordingly, in a preferred embodiment the angle (α) between the camera axis of the first camera and the longitudinal axis of the main body of the drone is an obtuse angle. In another preferred embodiment, the angle between the camera axis of the first camera and the longitudinal axis of the main body of the drone can be remotely tilted toward a right angle and preferably even to an acute angle.

Tilting the first camera unit and/or the second camera unit with regard to the longitudinal axis of the drone can enlarge the operational window for photos and videos to be taken. In particular, by being able to adjust the position of the camera unit an in particular fast moving object to be followed by the drone can be framed in a better manner.

In another preferred embodiment of the drone according to the invention the at least one first camera unit is part of an, in particular disassembled, action camera unit, such as a GoPro unit, incorporated in the main body. Alternatively, the first camera unit and the second camera unit can be integrated into and/or, in particular and, are forming a multifunctional camera unit. Action cameras such as GoPro cameras are usually used in action sports filming due to their capability to produce high quality photo and/or video footage even under harsh filming conditions, such as high speeds. For example, a GoPro Hero 11 has proven to be a suitable camera system for the present invention. This does not exclude other action camera systems having similar technical configurations; these can also be suitable to meet the requirements of the drone according to the invention.

In particular, when disassembling the second camera unit, meaning that the optics and the electronics are at least partly split from their original assembled configuration, the overall length of the drone can be reduced, in particular by up to 5 %, preferably by up to 10%, more preferably by up to 15% of their configuration before disassembling the second camera unit. This in turn helps to safe weight, thereby reducing the energy consumption of the drone during flight at, in particular high speeds.

In another preferred embodiment of the drone according to the invention the second camera unit is located closer to the tip of the drone than the first camera unit.

In another preferred embodiment of the drone according to the invention the battery module is partly placed inside the top section and partly inside the bottom section. This in most cases assists in finetuning the center of gravity to be in the or in particular above the plane spanned by a support structure of the in total three or the in total four rotor arms or above the plane spanned by the propellers of the in total three or the in total four rotor arms. By locating the battery partly in the top section and partly inside the bottom section an optimized weight distribution can be achieved. This also helps to achieve a stable flight even at high speeds.

According to another preferred embodiment of the drone according to the invention the arm covers of the rotor arms, are integral with the main body or are in one piece with the housing of the main body. Alternatively, and in particular in combination, the support structure of the in total three or the in total four rotor arms, in particular of the in total four rotor arms, is in one piece. Preferably, the angle between adjacent rotor arms of the in total four rotor arms is 90° in each case, and the angle between adjacent rotor arms of the in total three rotor arms is 120° in each case.

Particularly, if the support structure comprising the in total three or the in total four rotor arms is in one piece the overall weight of the drone can be reduced, in particular by reducing the number of connecting elements which are needed to attach the rotor arms to the support structure. Simultaneously, it has surprisingly been found that if the support structure comprising the in total three or the in total four rotor arms is in one piece a very stable construction can be accomplished which helps in reducing or even preventing vibration.

In another embodiment of the drone according to the invention the support structure of the rotor arms slides on the support structure of the drone, in particular from the bottom end towards the top section.

To allow high speeds of the drone according to the invention each motor is preferably adapted and arranged to have maximum RPM values in the range of 30.000 to 55.000, in particular in the range of 35.000 to 50.000 RPM. The maximum RPM level to be used is usually chosen depending on the rotor blades, so that the top speed of the rotor blades does not exceed a speed in which the performance of the rotor decreases due to the generation of unwanted inefficiencies, such as rotor blade vibrations.

In another preferred embodiment of the drone according to the invention, the plane spanned by the propellers of the in total three or of the in total four rotor arms, in particular of the in total four rotor arms, is perpendicular to the longitudinal axis of the drone. Alternatively, and in particular in addition, the rotor axis of each motor is parallel to the longitudinal axis of the drone.

In an alternative, also preferred embodiment of the drone according to the invention the rotor axis of each motor is tilted with respect to the longitudinal axis of the drone. In particular the rotational axes of the motors are tilted to the same degree with respect to the longitudinal axis of the drone. Alternatively, and in particular in addition, the planes in which the propellers of each of the three or four motors, in particular four motors, are rotatable are tilted relative to a perpendicular to the longitudinal axis of the drone, in particular in (an angle β in) a range from above 0 to 15°, more in particular in a range from 2 to 10°, and even more in particular in the range from 3 to 8°.

When the drone moves relative to a flow, in particular air flow, the drone in general generates an aerodynamic force essentially determined by its speed, and the angle of attack. This aerodynamic force is commonly resolved into three main components, (1) drag force which is the component essentially parallel to the direction of relative motion, (2) lift force, which is the component perpendicular to the direction of relative motion, and (3) the thrust force generated by the motors which is also a component essentially parallel to the direction of relative motion. Typically, the force vector of the drag force and the thrust force face away from each other. Surprisingly, by tilting the rotor axis of each motor of the drone with respect to the longitudinal axis of the drone the drag, lift and thrust forces can be balanced in a preferred manner such that a horizontal flight position of the main body of the drone with respect to its direction of travel can be achieved, in particular also at high speeds. In particular, it has been possible to prevent the top section of the drone to lift and cause the drone to leave its essentially horizontal position with respect to the direction of travel. A horizontal rocked drone position during flight reduces the cross-section of the drone exposed the air flow. Consequently, less drag force is generated which reduces the energy consumption of the drone at a given speed and allows for higher top speeds. In other words, the flight position becomes aerodynamically more efficient. With the above embodiment of the drone of the present invention, photos and videos of fast moving objects like F1 cars can be taken in a reliable manner in good quality even at high speeds.

In a preferred embodiment of the drone, in particular according to the previous embodiment, the camera axis of the first camera unit is tilted relative to a perpendicular to the longitudinal axis of the drone in a range from above 0 to 90°, in particular in a range from 15 to 85°, and more in particular in the range from 35 to 75°. In this way a particular stable horizontal flight position can be achieved. In particular, in such a configuration the longitudinal axis of the main body is positioned essentially parallel to the direction of travel.

The object underlying the present invention is also solved by a kit of parts for operating a drone, in particular according to the invention, in particular a FPV drone, comprising a drone, in particular a drone according to the present invention, a control unit, a relay drone being arranged and adapted to receive video signals from the second camera unit of the drone, or from the first camera unit and the second camera unit of the drone, in particularly exclusively from the second camera unit of the drone, and to transmit these video signals to at least one receiver unit, and a display unit, in particular goggles, that is/are adapted and arranged to receive video signals from the at least one receiver unit. These video signals can be transmitted either directly via the drone or preferably via the relay drone or via an intermediate base station, which obtains the video signals from the at least one receiver unit, to the goggles.

In a preferred embodiment, the at least one receiver unit, in particular each of the receiver units in case of more than one receiver unit, comprises an antenna, in particular a direction antenna, arranged and adapted to receive a video signal from the relay drone or from the drone according to the invention, in particular from the relay drone. In this manner, it is for example possible to aim a receiver unit to a specific part of a racing track or towards a pre-determined flight path of the relay drone. This helps to ensure to receive a signal of high quality in the correct directions for the flight path of the drones.

According to another preferred embodiment the kit of parts of the invention further comprises a base station containing a multitude of input-connectors each connected or connectable to a separate receiver unit and being adapted and arranged to transmit a video signal obtained from a receiver unit to the display unit, in particular to the goggles. The base station can take video inputs from different receiver units and is, in a preferred embodiment, adapted and arranged to switch between different receiver units. In this way, a video signal of primary interest or quality can be transmitted to the display unit, in particular to the googles.

In a preferred embodiment of the kit-of-parts according to the invention, the relay drone comprises a repeater module arranged and adapted to receive a control signal from the control unit and to transmit this control signal to the drone.

The relay drone is preferably used when the drone is covering a larger area, such as two square kilometres and more, in particular an area covered by a formular-1 track, which usually requires a stable communication between the controller, e.g. the drone pilot, of the drone and the drone itself. This ensures in a preferred embodiment at every moment in time a safe handling of the drone even when the drone travels at far distances away from the pilot stand. Such situations can also cause that objects on the terrain or the terrain itself have a negative effect on the connectivity of the drone pilot and the flying drone if no relay drone is used.

With the drones according to the invention the drawbacks of the prior art could be successfully solved. In particular, the drones according to the invention are optimized to allow for are stable flight position even at high speeds, and at the same time minimize the energy required to maintain said speed over a prolonged period of time. In this way it even becomes possible to follow a formula one racing car at full speed for an entire lap, e.g. 5 km at more than 200 km/h of average speed, and at the same time generate video footage of that car at high quality in a reliable manner. This so far has not been achieved with any other existing drone system.

It is to be understood, that the applicability of the drone according to the invention is not limited to sports car racing, in general essentially all objects with move at speeds and distances in the sense of this invention or below said speeds could be followed with the drone according to the present invention.

Preferred embodiments of the invention are described by way of example on the basis of the appended figures, in which, by way of example:
- Fig. 1: shows a side view of an exemplary embodiment of the drone according to the invention,
- Fig. 2: shows a bottom view of the exemplary embodiment of the drone shown in Fig. 1,
- Fig. 3: shows a front view of the exemplary embodiment of the drone shown in Fig. 1,
- Fig. 4: shows a front view of an exemplary embodiment of the support structure of a drone according to the invention,
- Fig. 5: shows a side view of another exemplary embodiment of the drone according to the invention with tilted rotor axes.

In the figures, elements which are the same or have the same or similar function are provided with the same reference numbers.

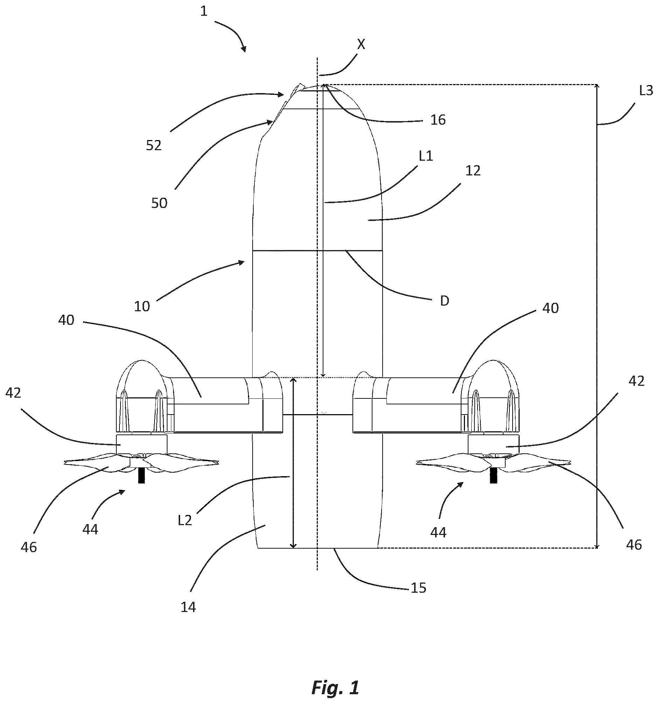

Figure 1 shows a side view of the drone 1 of the present invention with a longitudinally oriented main body or a so-called rocket-shaped main body 10 having a total length L3 and a longitudinal axis X. The -shaped main body 10 further comprises a top section 12 having a length L1 and a bottom section 14 having the length L2, four rotor arms 40 connected to the main body 10 in the transition from the top section 12 to the bottom section 14 each carrying a motor 42 and a propeller 44 in operative cooperation with the motor 42 and comprising a plurality of rotor blades 46, in the depicted embodiment two rotor blades aligned along a straight line. The drone 1 further comprises a first camera unit 50, e.g. a 4K digital video camera, and a second camera unit 52, in particular an analog video camera, integrated in the region of the tip 16 of the top section 12. In the exemplary embodiment shown in Figure 1 the bottom section 14 tampers by around 8% in the region just below the rotor and the end 15 of the drone 1.

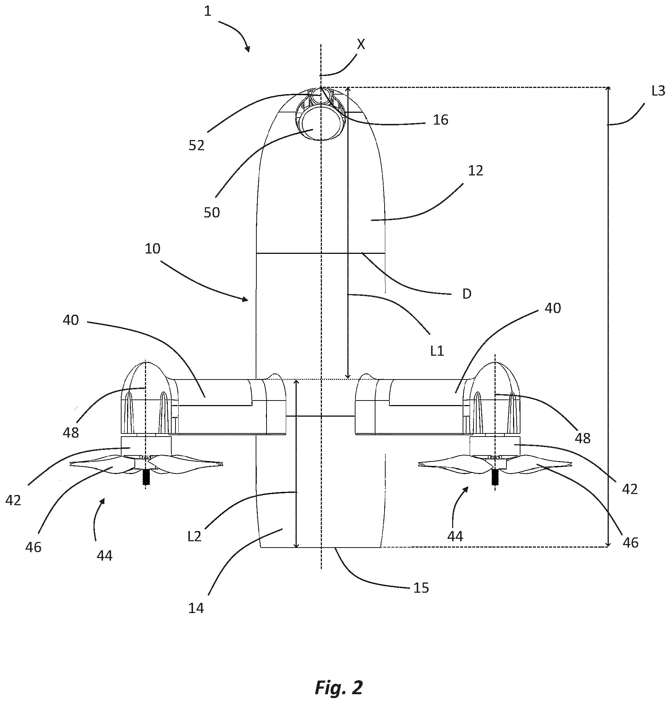

Fig. 2 shows the same drone as in Figure 1 rotated around its longitudinal axis X by 90° anticlockwise. This allows a better view on the first and second camera units 50, 52 located in the region of the tip 16 of the top section 12.

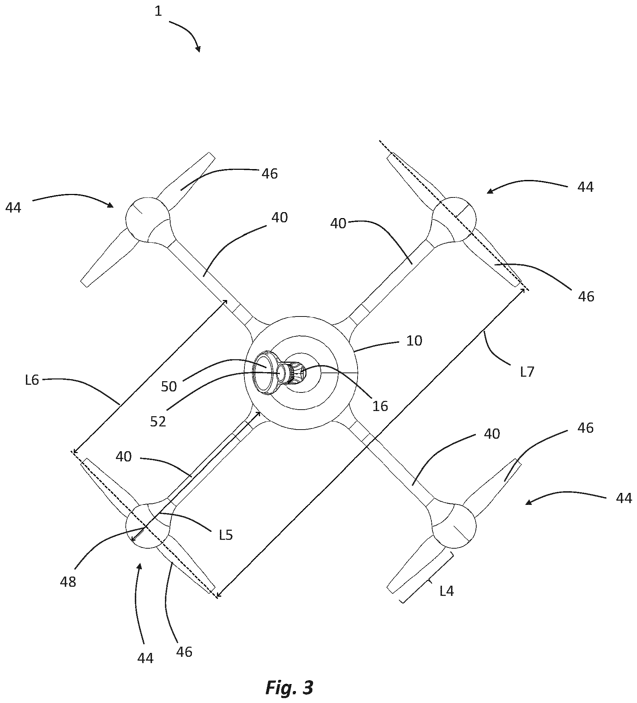

In Fig. 3 a front view on the tip 16 of the main body 10 of the drone described in Fig. 1 is shown. In this view the distance L6 between the rotor axis 48 of a propeller 44 and the longitudinal axis X of the drone is indicated. Further, the distance L7 between the rotor axes 48 of two opposing propellers is indicated as well as the length L4 of a rotor blade and the length L5 of the rotor arms.

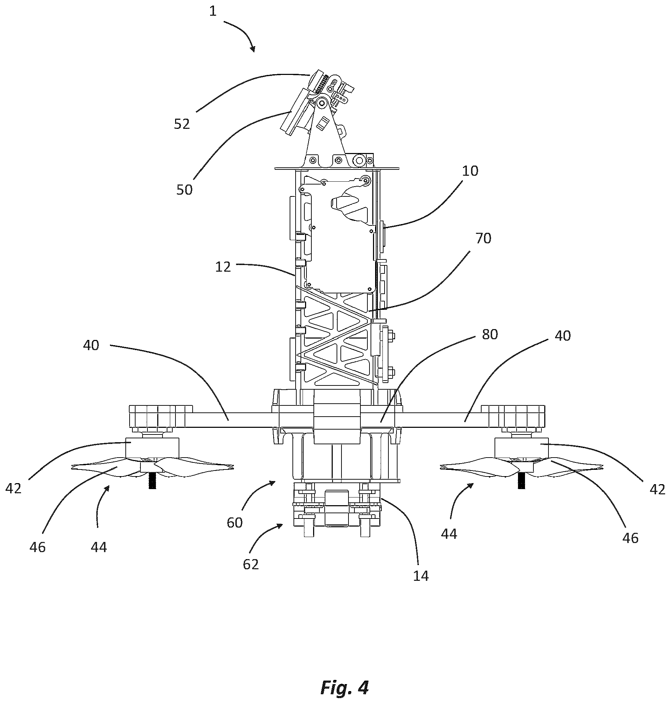

Fig. 4 shows the drone 1 of Fig. 1 without the housing of the main body 10 and without the canopy of the rotor arms 40. In this way the support structure 70 of the top section 12 of the exemplary drone becomes exposed. In the configuration shown, the rotor arms 40 of all four rotors 42 are integrated in one single support structure 80. Said structure 80 comprising the rotor arms 40 is then attached to the support structure 70 of the top section 12. In this way a drone 1 is formed by use of two main structural pieces. Further, a first heat sink of the heat sink unit 62 is positioned in the region of the bottom section 14, and second heat sink of the heat sink unit 62 is positioned in the upper part of the top section 12 (not shown). Consequently, the second heat sink of the heat sink unit 62 helps to cool the PCB (also not shown) located in the same area. A battery module 60 is located in the drone 1 of Fig. 4 in the bottom section 14 close to the support structure 80 of the rotor arms 40.

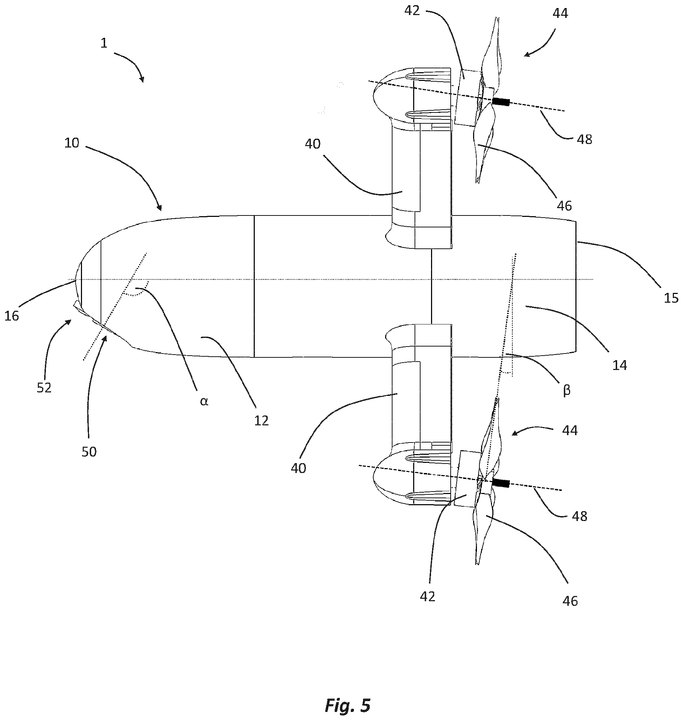

In Fig. 5 another preferred configuration of the drone 1 according to the invention is shown. This configuration is essentially identical to the configuration shown in Fig. 1 with the difference that the rotor axes 48 of all propellers 44 (only two are shown) are tilted towards the side of the drone comprising the cameras units 50, 52. Even though not all rotors are shown, it is preferred that all rotor axis 48 are tilted essentially identically. As shown, the angle β between the planes in which the propellers of each of the four motors rotate and the perpendicular to the longitudinal axis of the drone is an acute angle. As can also be seen in Fig. 5, in a preferred embodiment the angle α between the camera axis of the first camera and the longitudinal axis of the main body of the drone is an obtuse angle.

The features of the invention disclosed in the above description, the claims and in the drawings can be essential both individually and in any combination for the implementation of the invention in its various embodiments.

### Reference numbers

- 1: drone
- 10: main body
- 12: top section
- 14: bottom section
- 15: end of the drone
- 16: tip of the drone
- 40: rotor arms
- 42: motor
- 44: propellers
- 46: rotor blades
- 48: rotor axis
- 50: first camera unit
- 52: second camera unit
- 60: battery module
- 62: heat sink unit
- 70: support structure
- 80: support structure for the rotor arms

- L1: length of the top section
- L2: length of the bottom section
- L3: total length of the drone
- L4: length of the rotor blades
- L5: length of the rotor arms
- L6: distance between the rotor axis of a propeller and the longitudinal axis X
- L7: distance between the rotor axes of two opposing propellers
- X: longitudinal axis of the drone

## Claims

1. Drone (1), in particular FPV drone (1), comprising
- a longitudinally oriented main body (10), having a longitudinal axis (X), with a top section (12) and a bottom section (14), each having a housing,
- three or four rotor arms (40), in particular four rotor arms (40), connected to the main body (10) in the transition from the top section (12) to the bottom section (14), each carrying a motor (42), and a propeller (44) in operative cooperation with the motor (42) and comprising a plurality of rotor blades (46), in particular two rotor blades (46), wherein the three or four rotor arms (40) comprise a support structure (80),
- a first camera unit (50) integrated in the top section (12), in particular in the region of or adjacent to the, in particular rounded or tapered, tip (16) of the top section (12), which comprises a high-resolution digital video camera having a camera axis, in particular a 4K, 5K, 6K, 7K or 8K digital video camera,
- a battery module (60),
wherein the center of gravity of the drone (1) lies in the or in particular above the plane spanned by the support structure (80) of the rotor arms (40) or above the plane spanned by the propellers (44) of the rotor arms (40).

2. Drone (1) according to claim 1, further comprising
a second camera unit (52) integrated in the top section (12) which comprises a camera having a camera axis, in particular in the region of or adjacent to the, in particular rounded or tapered, tip (16) of the top section (12), in particular an analog video camera,

3. Drone (1) according to claim 1 or 2, further comprising
a damper unit adapted and arranged to stabilize the first camera unit (50), in particular against vibration, and/or a mounting for the first camera unit (50), wherein the mounting comprises an elastic material, in particular a thermoplastic elastomer, and/or, in particular and,
at least one heat sink unit (62), in particular based on aluminum, and/or, in particular and,
a support structure (70) of the top section (12) of the main body (10) inside the housing of the main body (10), in particular made in one piece, more in particular made of a thermoplastic polymer, preferably of polyamide, e.g. by 3D printing, or made of at least two pieces a first piece from a thermoplastic polymer, preferably of polyamide, e.g. via 3D printing, and a second piece comprising a carbon fiber-reinforced matt placed on and connected to said first piece, and
optionally, in particular remotely operable, drag means, in particular flaps, adapted and arranged to decelerate the drone (1).

4. Drone (1) according to any of the preceding claims, **characterized in that**
the length (L1) of the top section (12) along the longitudinal axis is in the range of 150 to 250 mm, preferably 170 to 220 mm and/or, in particular and,
the length (L2) of the bottom section (14) along the longitudinal axis is in the range of 50 to 150 mm, preferably 70 to 120 mm, and/or, in particular and,
the total length (L3) of the drone (1) along the longitudinal axis is in the range of 200 to 400 mm, preferably 240 to 350 mm, and/or, in particular and,
the length (L4) of the rotor blades (46) is in the range of 30 to 90 mm, preferably 40 to 80 mm, and/or, in particular and,
the length (L5) of the rotor arms (40) is in the range of 70 to 175 mm, preferably 100 to 155 mm, or **in that**
the distance (L6) between the rotor axis (48) of a propeller (44), in particular of all propellers (44), and the longitudinal axis (X) of the drone (1) is in the range of 100 to 180 mm, preferably 120 to 160 mm.

5. Drone (1) according to any of the preceding claims, **characterized in that**
the camera axis of the first camera unit (50) and in particular the camera axis of the first camera unit (50) and the camera axis of the second camera unit (52) is/are tilted with regard to the longitudinal axis (X) of the drone (1) or is/are arranged and adapted to be tilted, in particular in a remotely controlled manner, at least in one dimension with regard to the longitudinal axis (X) of the drone (1).

6. Drone (1) according to any of the preceding claims, **characterized in that**,
if the drone has four rotor arms, the distance (L7) between the rotor axes (48) of two opposing propellers (44) is larger than the length of the drone (1) along the longitudinal axis, and/or, in particular and,
the maximum diameter of the top section (12) is in the range of 60 to 90 mm, preferably 65 to 85 mm, and
optionally the maximum diameter of the bottom section (14) is in the range of 60 to 900 mm, preferably 70 to 80 mm.

7. Drone (1) according to any of the preceding claims, **characterized in that**
the housing or part of the housing of the main body (10) comprises or consists of carbon fiber material, polyesters, in particular polylactides, and/or polyamides, in particular polyamide 12 ("PA12"), or wherein the housing or a part of the housing is made of foamed material, in particular of foamed thermoplastic polymers, more in particular foamed polylactides.

8. Drone (1) according to any of the preceding claims, **characterized in that**
The first camera unit (50) is part of an, in particular disassembled, action camera unit, such as a GoPro unit, incorporated in the main body (10), or that the first camera unit (50) and the second camera unit (52) are integrated into and/or, in particular and, are forming a multifunctional camera unit having a single camera axis.

9. Drone (1) according to any of the preceding claims, **characterized in that**
a PCB, in particular the PCB of an action camera unit, such as a GoPro unit, is placed next to the battery module (60), in particular on a back plate next to the battery module (60), more in particular fixed to the battery module (60), and/or, in particular and, **in that** the PCB is located adjacent to a first heat sink unit of the at least one heat sink unit (62), more in particular connected to the first heat sink unit (62) via a cooling paste.

10. Drone (1) according to any of the preceding claims, **characterized in that**
its weight is in the range of 750 to 1500 g, preferably 800 to 1200 g, and/or, in particular and,
the weight of the battery module (60) is in the range of 350 to 600 g, preferably 400 to 500 g.

11. Drone (1) according to any of the preceding claims, **characterized in that**
the battery module (60) is partly placed inside the top section (12) and partly inside the bottom section (14).

12. Drone (1) according to any of the preceding claims, further comprising
an electronic speed controller, in particular located adjacent, in particular connected, to at least one second heat sink unit of the at least one heat sink unit (62), more in particular located between two second heat sink units.

13. Drone (1) according to claim 12, **characterized in that**
the electronic speed controller is positioned in the bottom section (14).

14. Drone (1) according to any of the preceding claims, **characterized in that**
the rotor arms (40) are an integral part of the main body (10) or are in one piece with the housing of the main body, and/or **in that** the support structure of the in total three or in total four rotor arms is in one piece, and/or, in particular and,
**in that** the angle between adjacent rotor arms (40) of the in total four rotor arms is 90° in each case, or **in that** the angle between adjacent rotor arms (40) of the in total three rotor arms is 120° in each case.

15. Drone (1) according to any of the preceding claims, **characterized in that**
each motor (42) is adapted and arranged to have maximum RPM values in the range of 30.000 to 55.000, in particular in the range of 35.000 to 50.000 RPM.

16. Drone (1) according to any of the preceding claims, **characterized in that**
the second camera unit (52) is located closer to the tip of the drone (1) than the first camera unit (50).

17. Drone (1) according to any of the preceding claims, **characterized in that**
the center of gravity lies adjacent to the plane spanned by the support structure of the in total three or in total four rotor arms (40) or adjacent to the plane spanned by the propellers (44) of the in total three or in total four rotor arms (40), and/or, in particular and, the center of gravity is located in a part of the top section between the plane spanned by the support structure of the in total three or in total four rotor arms and one quarter, in particular one fifth, more in particular one eighth, of the extension from this plane to the tip of the top section.

18. Drone (1) according to any of the preceding claims, **characterized in that**
the plane spanned by the propellers (44) of the in total three or in total four rotor arms (40) is perpendicular to the longitudinal axis (X) of the drone (1) or that the rotor axis (48) of each motor (42) is parallel to the longitudinal axis (X) of the drone (1).

19. Drone (1) according to any of claims 1 to 17, **characterized in that**
the rotor axis (48) of each motor (42) is tilted with respect to the longitudinal axis (X) of the drone (1), in particular the rotational axes of the motors (42) are tilted to the same degree with respect to the longitudinal axis of the drone (1), or **in that** the planes in which the propellers (44) of each of the four motors (42) are rotatable are tilted relative to a perpendicular to the longitudinal axis of the drone (1), in particular in a range from above 0 to 15°, more in particular in a range from 2 to 10°, and even more in particular in the range from 3 to 8°.

20. Drone (1) according to any of claim 19, **characterized in that**
the camera axis of the first camera unit (50) is tilted relative to a perpendicular to the longitudinal axis of the drone (1) in a range from above 0 to 90°, in particular in a range from 15 to 85°, and more in particular in the range from 35 to 75°.

21. Drone (1) according to any of the preceding claims, **characterized in that**
the bottom section (14) is not tapered towards the end of the drone (1) or is tapered in the region of the bottom section towards the end of the drone by at most 10 % of the diameter just below the rotor arms (40).

22. Kit of parts for operating a drone (1), in particular a drone according to any of the preceding claims, comprising
a drone (1), in particular according to any of the preceding claims, a control unit, a relay drone being arranged and adapted to receive video signals from the second camera unit (52) of the drone (1) or from the first camera unit (50) and the second camera unit (52) of the drone (1), in particularly exclusively from the second camera unit (52) of the drone (1), and to transmit these video signals to at least one receiver unit, and a display unit, in particular goggles, that is/are adapted and arranged to receive video signals from the at least one receiver unit either directly or via an intermediate base station.

23. Kit of parts according to claim 22, **characterized in that**
the at least one receiver unit, in particular each of the receiver units in case of more than one receiver unit, comprises an antenna, in particular a direction antenna, arranged and adapted to receive a video signal from the relay drone or from the drone according to any of claims 1 to 21, in particular from the relay drone.

24. Kit of parts according to claim 23, further comprising
a base station containing a multitude of input-connectors each connected to a separate receiver unit of the more than one receiver units and being adapted and arranged to transmit a video signal obtained from a receiver unit to the display unit, in particular to the goggles.

25. Kit of parts according to any of claims 22 to 24, **characterized in that**
the relay drone comprises a repeater module a) arranged and adapted to receive a control signal from the control unit and to transmit this control signal to the drone (1), or b) arranged and adapted to receive a control signal from the control unit and to transmit this control signal to the drone (1) and also arranged and adapted to transmit the video signals, in particular the video signals received from the second camera unit (52) of the drone (1), to the receiver station.
